# EUROPEAN PATENT SPECIFICATION

(11) **EP 3 864 880 B1**
(45) Date of publication and mention of the grant of the patent: **10.05.2023**
(21) Application number: 18788722.9
(22) Date of filing: 12.10.2018
(51) Int. Cl.: H04W 24/00

(54) **DEVICES AND METHODS FOR DISCOVERING COLLECTABLE DATA AND ANALYTICS DATA IN A NETWORK**
VORRICHTUNGEN UND VERFAHREN ZUR ENTDECKUNG VON SAMMELBAREN DATEN UND ANALYTIKDATEN IN EINEM NETZWERK
LES DISPOSITIFS ET MÉTHODES PERMETTANT DE DÉCOUVRIR DES DONNÉES COLLECTÉES ET DES DONNÉES ANALYTIQUES DANS UN RÉSEAU

(43) Date of publication of application: 18.08.2021
(73) Proprietor: Huawei Technologies Co., Ltd., Shenzhen, Guangdong 518129 (CN)
(72) Inventor: WEI, Qing, 80992 München (DE); ABBOUD, Osama, 80992 München (DE); MARQUEZAN, Clarissa, 80992 München (DE)
(74) Representative: Epping - Hermann - Fischer
(86) International application number: PCT/EP2018/077849
(87) International publication number: WO 2020/074092

(56) References cited:
- US-A1- 2018 262 924
- "3rd Generation Partnership Project; Technical Specification Group Services and System Aspects; Study of Enablers for Network Automation for 5G (Release 16)", 3GPP STANDARD; TECHNICAL REPORT; 3GPP TR 23.791, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.0.0, 6 September 2018 (2018-09-06), pages 1-66, XP051475227, [retrieved on 2018-09-06]
- HUAWEI ET AL: "Use Case and KI for NWDAF exposing analytics to OAM", 3GPP DRAFT; S2-186668 - USE CASE AND KI FOR NWDAF EXPOSING ANALYTICS TO OAM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. SA WG2, no. Vilnius, Lithuania; 20180702 - 20180706 1 July 2018 (2018-07-01), XP051469815, Retrieved from the Internet: URL:http://www.3gpp.org/ftp/Meetings%5F3GP P%5FSYNC/SA2/Docs [retrieved on 2018-07-01]
- ORANGE: "Solution 2 update: Content of Network Data Analytics Feedback", 3GPP DRAFT; S2-186347_ENA_CONTENT OF NETWORK DATA ANALYTICS FEEDBACK_REV3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. SA WG2, no. Vilnius, Lithuania; 20180702 - 20180706 1 July 2018 (2018-07-01), XP051469506, Retrieved from the Internet: URL:http://www.3gpp.org/ftp/Meetings%5F3GP P%5FSYNC/SA2/Docs [retrieved on 2018-07-01]
- SAMSUNG: "A solution to provide the available analytic information metadata", 3GPP DRAFT; S2-186724_NEW SOLUTION TO PROVIDE A SET OF AVAILABLE ANALYTICS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. SA WG2, no. Vilnius, Lithuania; 20180702 - 20180706 1 July 2018 (2018-07-01), XP051469869, Retrieved from the Internet: URL:http://www.3gpp.org/ftp/Meetings%5F3GP P%5FSYNC/SA2/Docs [retrieved on 2018-07-01]

## Description

### TECHNICAL FIELD

The present disclosure relates generally to a new framework for discovering collectable data and/or analytics data in a network. In particular, the disclosure presents a device for discovering data in the network. In addition, the disclosure presents devices for providing collectable data in a network, systems comprising such devices, a method for discovering data in a network and a method for providing collectable data in a network.

### BACKGROUND

5G systems (5GS) defined by 3GPP from Rel. 15 in TS 23.501 support Network Function (NF) discovery based on a Network Repository Function (NRF). Details of registration and discovery functionalities are described in the specifications 3GPP TS 23.502 and TS 29.510. There are two main types of information in 5GS that can be discovered at the NRF: NF instances and their associated services. Any subsequent requests/subscriptions to the services of the NFs will have to include the specific required information from the NF. For instance, if a Network Data Analytics Function (NWDAF) needs to register to collect data from NFs, it must indicate in the registration the ID of the data the NWDAF intends to collect. Likewise, if NFs, AFs, and Operations, Administration and Management (OAM) need to subscribe to analytics (analytics data) from the NWDAF, they need to send the subscription request including the ID of the analytics data. There are, however, three main problems with the current stage of the 3GPP specifications.

First, it is reasonable to expect that deployments of 5G networks will operate with standardized and non-standardized collectable data and analytics data types. Therefore, discovery of non-standardized collectable data and analytics data types should be considered in the design of the 5GS. Moreover, even standardized data must be discovered, because an NF instance might not offer all standardized data (or analytics), and this is the same logic from the definition of NF Services in NRF, i.e., one NF instance might not offer all standardized services for that type of NF. Thus, a design considering that not always all services and data will be available at a NF instance has the main advantage of offering more flexibility in the deployment of 5GS such that it can address different deployment scenarios and use-cases.

Second, without an automated mechanism for discovering data to be collected, as well as analytics data to be consumed, operators need to manually change the NFs/AFs software/scripts to be able to subscribe to the NWDAF analytics and vice-versa for NWDAF to collect data.

Third, in the case when an administrator of the NFs, AFs, and Analytics Function inside the 5GS are not the same one of the OAM, the OAM is aware of the initial configuration of such NFs, but the OAM can only become aware of changes in the NFs (e.g., new types of analytics or data to be collected), if the administrator of such NFs personally/manually informs to the OAM administrator of such changes.

Below, some conventional implementations are described.
- NWDAF in TR 23.791 and TS 23.50:
   ▪ New service defined in TR 23.791 to be provided by the NFs for data collection, but no operation for discovering the data sets that can be actually collected from the NFs.
   ▪ New recommendation service defined in TR 23.791, but again no operation to allow any discovery.
   ▪ NWDAF Services defined in TS 23.502 do also not offer any option to discover, which analytics categories are exposed.
- NF Profile information available in NRF (TS23.501, TS23.502, TS29.510):
   ▪ NF profile does neither allow for the discovery of data that can be collected from NFs nor the analytics exposed by the NWDAF.
- NF information Exposure via NEF (TS23.501, TS23.502, TS29.522):
   ▪ Description of the requirement to expose NF capabilities for analytics, but no concrete specification about the capabilities or services for analytics.
- Data Storages in 3GPP (UDR, UDM, UDSF):
   ▪ Enables the possibility of storing structured data (i.e., standardized) in Unified Data Management (UDM) and Unified Data Repository (UDR), and unstructured data (non-standardized) in Unstructured Data Storage Function (UDSF), but no definition of storage supporting data collection or analytics discovery.

Specifically, 3 GPP TR 23.791, V1.0.0, 3rd Generation Partnership Project; Technical Specification Group Services and System Aspects; Study of Enablers for Network Automation for 5G (Release 16) aims to study and specify how to collect data and how to feedback data analytics to the network functions. According to Solution 13 (Metadata exposure to 5GS NF and AF), Metadata refers to a set of descriptive data on the analytic information provided by the NWDAF. For example, the metadata could contain the list of the available analytic information, the analytic information name/description, the calculation algorithm, the analysed data granularity, the sampling rate, etc.

US 2018/262924 A1 provides network data analytics (NWDA) function and method of policy optimization in a communication network. The NWDA performs data analytics on the communication network traffic, and includes communication interfaces to connect to other network elements in the communication network. The method comprises the NWDA function configured to receive a request for a policy input, send instructions to network elements to obtain network performance measurement data, receive the measurement data from the network elements, and transmit a policy input based on the received measurement data.

### SUMMARY

In view of the above-mentioned problems and disadvantages, the present disclosure aims to improve the conventional implementations regarding discovery and collecting data and, respectively, discovery and consuming analytics data in a network. An objective is thereby to solve the above-mentioned problems, namely by defining a dynamic and automated discovery of analytics data and/or collectable data.

In particular, the following problems should be tackled:
- How can standard and non-standard collectable data be identified, so that such data can be requested for data collection
- How can it be known in the first place, which collectable data and/or analytics data categories are available (e.g. standardized and non-standardized) and are exposed in the network, and can thus be obtained

The invention is defined by the appended claims. One or more of the above-mentioned objectives is achieved by a device for discovering data in a network, a device for providing collectable data in a network, systems comprising such devices, a method for discovering data in a network and a method for providing collectable data in a network as provided in the enclosed independent claims. Advantageous implementations of the present invention are further defined in the dependent claims. Other embodiments disclosed herein, which do not fall under the scope of the attached claims, are provided as examples useful for understanding the invention.

A first aspect of the disclosure provides a device for discovering data in a network, the device being configured to receive collectable data information from a first device, receive a query for collectable data information from a second device, and provide the collectable data information to the second device in response to its query.

The device of the first aspect is implemented as NRF. The first device is a device providing collectable data, e.g. is implemented as AF and/or NF providing collectable data. The second device is a device seeking data in the network, i.e. collectable data. For instance, the second device may be implemented as NWDAF seeking collectable data. The second device can also be the first device. The collectable data information and/or analytics metadata information may be included in an extended NF Profile (also referred to as "advertisement" herein) as currently defined in TS 23.502 and TS 29.510. Collectable data information and/or analytics metadata information are defined further below.

With the device of the first aspect, a Discovery Function for collectable data may be provided in the network. By means of the collectable data information, the available categories of such data are exposed. In this way, both standard and non-standard collectable data can be identified, such that it can be requested for collection or consumption. A dynamic and automated discovery of analytics data is thereby defined, improving on the conventional implementations.

In an implementation form of the first aspect, the device is further configured to provide a notification about a change in the status and/or availability of the collectable data information and/or analytics metadata information to the second device.

Thus, the second device is kept up-to-date about the available data.

A second aspect of the disclosure provides a device for providing collectable data in a network, the device being configured to generate collectable data information related to the collectable data, and send the collectable data information to a device for discovering data in the network.

The device for discovering data in the network can be the device of the first aspect, and may also be the first device and/or the second device.

By providing the collectable data information to the discovery device (Discovery Function), the available collectable data can be exposed in the network.

In an implementation form of the second aspect, the device is further configured to receive a request for collectable data based on the collectable data information, wherein the receiving is from a second device, and provide collection point information related to the collectable data to the second device in response to its request.

The second device is a device seeking data, particularly collectable data, in the network. For instance, it may be an NWDAF. The collectable data information makes it easy for the second device to find the device of the second aspect as a recipient of its request. The collection point information indicates from where the second device can obtain the collectable data.

In a further implementation form of the second aspect, the device is configured to configure a target device that is to receive data from the device.

The target device may be an External Collection Point (ECP) and/or a relay. The configuration can comprise authorization or retrieval interpretation information. The second device can then communicate with the target device, and can request and obtain the collectable data from there.

In a further implementation form of the second aspect, the device is configured to receive a request for collectable data based on the collectable data information, wherein the receiving is from a second device, and provide retrieval interpretation information related to the collectable data to the second device in response to its request, and/or provide retrieval interpretation information for the configuration of a target device

The target device may be a device for providing the collectable data, when the collection point information indicates an indirect collection point. The retrieval interpretation information allows reading and processing also non-standard collectable data.

A third aspect of the disclosure not covered by the attached set of claims provides a device for providing analytics data in a network, the device being configured to generate analytics metadata information related to an analytics data, and send the analytics metadata information to a device for discovering data in the network.

The device of the third aspect for providing analytics data may be an NWDAF, and may be the device of the second aspect.

By providing the analytics metadata information to the discovery device (Discovery Function), the available analytics data can be exposed in the network.

A fourth aspect of the disclosure not covered by the attached set of claims provides a device for seeking collectable data in a network, particularly the device of the third aspect, the device being configured to obtain, in particular query and receive, collectable data information from a device for discovering data in the network, obtain, in particular by sending a request for, collectable data according to the collectable data information from a first device, receive collection point information and/or retrieval interpretation information related to the collectable data from the first device in response to the request, and obtain the collectable data from a collection point according to the collection point information and/or based on the retrieval interpretation information.

The first device may be a device providing collectable data, e.g. an NF and/or AF. The collectable data can be obtained from a device providing collectable data and/or from the received collectable information from the device for discovering data.

The device of the fourth aspect can easily and efficiently obtain the collectable data, even if it is non-standardized.

In an implementation form of the fourth aspect, the device is further configured to obtain the collectable data from the first device, if the collection point according to the collection point information is a direct collection point, and/or obtain the collectable data from another device, if the collection point according to the collection point information is an indirect collection point.

In a further implementation form of the fourth aspect, the device is further configured to obtain the collectable data from the first device, to which the request was sent, if the collection point according to the collection point information is a direct collection point, and/or obtain the collectable data from another device, particularly by sending a further request to the another device, which the request was not sent to.

The collectable data may particularly be obtained from another device, if the collection point according to the collection point information is an indirect collection point. The other device may be the external collection point.

A fifth aspect of the disclosure not covered by the attached set of claims provides a device for seeking analytics data in a network, particularly the device of the second aspect, the device being configured to obtain, in particular query and receive, analytics metadata information from a device for discovering data in the network, obtain, in particular based on a request and/or subscription, analytics data from a second device according to the analytics metadata information.

The device of the fifth aspect may be an OAM. The device of the fifth aspect can easily and efficiently obtain the analytics data, which is available in the network.

A sixth aspect of the disclosure provides a method for discovering data in a network, the method comprising obtaining collectable data information from a first device, obtaining a query for collectable data information from a second device, and providing the collectable data information obtained from the first device to the second device in response to its query.

The method of the sixth aspect achieves the same advantages and effects as the device of the first aspect, and can be extended with corresponding implementation forms.

A seventh aspect of the disclosure provides a method for providing collectable data in a network, the method comprising generating collectable data information related to the collectable data, and sending the collectable data information to a device for discovering data in the network.

The method of the seventh aspect achieves the same advantages and effects as the device of the second aspect, and can be extended with corresponding implementation forms.

An eight aspect of the disclosure not covered by the attached set of claims provides a method for providing analytics data in a network, the method comprising generating analytics metadata information related to the analytics data, and sending the analytics metadata information to a device for discovering data in the network.

The method of the eighth aspect achieves the same advantages and effects as the device of the third aspect, and can be extended with corresponding implementation forms.

A ninth aspect of the disclosure not covered by the attached set of claims provides a method for seeking collectable data in a network, the method comprising obtaining, in particular querying and receiving, collectable data information from a device for discovering data in the network, obtaining, in particular by sending a request for, collectable data according to the collectable data information from a first device, obtaining collection point information and/or retrieval interpretation information related to the collectable data, wherein the obtaining is from the first device in response to the request, and obtaining the collectable data from a collection point according to the collection point information and/or based on the retrieval interpretation information.

The method of the ninth aspect achieves the same advantages and effects as the device of the fourth aspect, and can be extended with corresponding implementation forms.

A tenth aspect of the disclosure not covered by the attached set of claims provides a method for seeking analytics data in a network, the method comprising obtaining, in particular querying and receiving, analytics metadata information from a device for discovering data in the network, obtaining, in particular by sending a request for, analytics data according to the analytics metadata information from a device providing analytics data in the network.

The method of the tenth aspect achieves the same advantages and effects as the device of the fifth aspect, and can be extended with corresponding implementation forms.

In an implementation form of any of the first to tenth aspects, the collectable data information indicates related collectable data and how this related collectable data can be obtained.

In a further implementation form of any of the first to tenth aspects, the collectable data information includes at least one of an identification of related collectable data, a type of the related collectable data, a service of the device providing the related collectable data, in particular which is to be used to obtain the collectable data, collection point information, retrieval interpretation information.

In a further implementation form of any of the first to tenth aspects, the analytics metadata information indicates related analytics data.

In a further implementation form of any of the first to tenth aspects, the analytics metadata information includes at least one of: an identification of related analytics data, a category of the analytics data, and/or a type of the analytics data, a target object, e.g. per network slice or per application, a target value, e.g. key performance indicators associated with the identification of the related analytics data, a target parameter, e.g. a granularity of, collection interval for, and/or algorithm applicable for, the related analytics data.

In a further implementation form of any of the first to tenth aspects, the collection point information indicates from where related collectable data can be obtained.

In a further implementation form of any of the first to tenth aspects, the collection point information includes at least one of: a type of a related collection point, in particular a type of a direct or an indirect collection point, an identification of the related collection point.

In a further implementation form of any of the first to tenth aspects, the retrieval interpretation information indicates how related collectable data can be read and/or processed.

In a further implementation form of any of the first to tenth aspects, the retrieval interpretation information includes at least one of: an identification of interpreter applicable to related collectable data, an interpreter type, an interpreter reference.

It has to be noted that the devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present disclosure will be explained in the following description of specific embodiments in relation to the enclosed drawings, in which:
- FIG. 1: shows devices according to embodiments of the disclosure in a network;
- FIG. 2: shows steps of discovering collectable data and analytics data in a network;
- FIG. 3: shows a procedure for analytics metadata information registration by NWDAF and for NFs/AFs/OAM discovery/querying analytics data at NRF;
- FIG. 4: shows a procedure for NFs/AFs/OAM subscribing to receive notifications about changes in analytics metadata information at NRF;
- FIG. 5: shows a procedure for collectable data information registration by NFs/AFs, for NWDAF discovering/querying collectable data information at NRF, and for data collection by NWDAF;
- FIG. 6: shows a method for discovering data in a network according to an embodiment of the disclosure;
- FIG. 7: shows a method for providing collectable data in a network according to an embodiment of the disclosure;
- FIG. 8: shows a method for providing analytics data in a network according to an embodiment of the disclosure not covered by the claims;
- FIG. 9: shows a method for seeking collectable data in a network according to an embodiment of the disclosure; and
- FIG. 10: shows a method for seeking analytics data in a network according to an embodiment of the disclosure not covered by the claims.

### DETAILED DESCRIPTION OF EMBODIMENTS

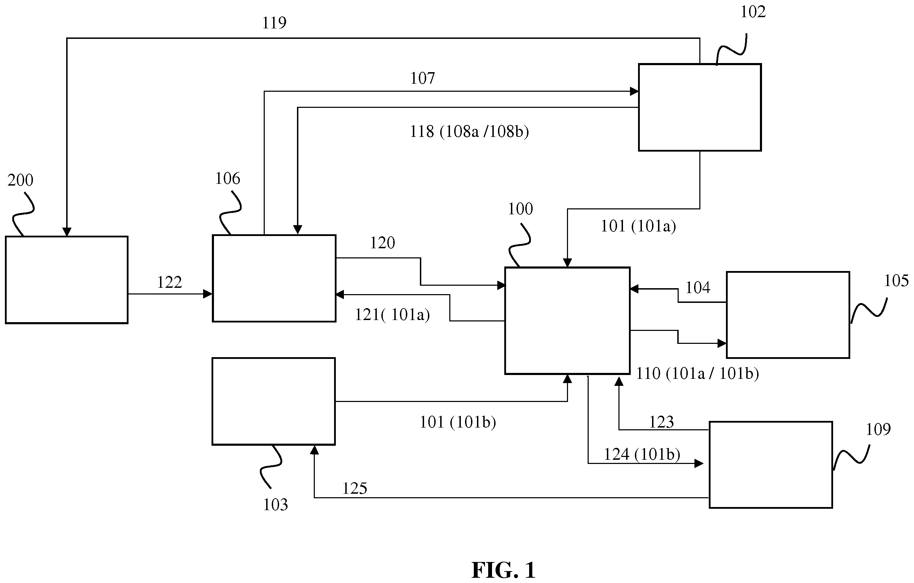

FIG. 1 shows several devices 100, 102, 103, 105, 106, and 109 according to embodiments of the disclosure in a network. FIG. 1 also shows specific interactions of these devices 100, 102, 103, 105, 106, and 109, as described in detail further below. Notably, the interactions shown in FIG. 1 are not the only possible interactions between these devices.

In particular, device 100 is configured to discover data in the network. Device 102 is configured to provide collectable data in the network. Device 103 is configured to provide analytics data in the network. Device 105 is configured to seek data in the network. Device 106 is configured to seek particularly collectable data in the network. Device 109 is configured to seek particularly analytics metadata information. Accordingly, device 106 and 109 may be the same as device 105. Further, device 106 and device 103 may be implemented as a single device, as well as device 109 and device 102.

Device 100 is particularly configured to receive collectable data information 101a and/or analytics metadata information 101b from device 102 and/or 103. Further, device 100 is configured to receive a query 104 for collectable data information and/or analytics metadata information, for instance, from device 105. It may, however, also receive such a query 104 from device 102 and/or device 103. Device 100 is then configured to provide the collectable data information 101a and/or analytics metadata information 101b received from the device 102 to the second device 105 (and/or device 102 and/or device 103) in response to its query 104. Device 100 may be a Discovery Function and/or a NRF. Device 105 may be an OAM.

Device 100 may further provide a notification 110 about a change in the status and/or availability of the collectable data information 101a and/or analytics metadata 101b information to the device 105 (and/or device 102 and/or device 103).

Device 102 is particularly configured to generate the collectable data information 101a related to the collectable data, and send the collectable data information 101a to the device 100. The device(s) 102 may be NFs 102a, and/or AFs 102a, and/or a data storage.

Device 102 may further receive a request 107 for collectable data based on the collectable data information, wherein the receiving may be from device 106, as exemplarily shown in FIG. 1 (but may be likewise from device 103 and/or device 105). The device 102 may then provide 118 collection point information 108a related to the collectable data to the device 106 (and/or device 103 and/or device 105) in response to its request 107, and/or may provide retrieval interpretation information 108b related to the collectable data to the device 106 (and/or device 103 and/or device 105) in response to the request 107, and/or may provide retrieval interpretation information 108b for the configuration of a target device 200. Further, the device 102 may also configure 119 the target device 200, which may e.g. be an ECP.

Device 103 is configured to generate the analytics metadata information 101b related to the analytics data, and send the analytics metadata information 101b to the device 100. The device 103 may be an Analytics Function and/or a NWDAF.

Device 106 is configured to obtain, for example to query and receive, the collectable data information 101a from the device 100, and then obtain, for example by sending a request 107 for, collectable data according to the collectable data information 101 from device 102. Further, the device 106 is configured to receive collection point information 108a and/or retrieval interpretation information 108b related to the collectable data from device 102 in response to the request 107, and to obtain the collectable data from a collection point according to the collection point information 108a and/or based on the retrieval interpretation information 108b. The device 106 may be an Analytics Function and/or NWDAF or another 5GS entity.

Device 109 is configured to obtain, for example to query 123 and receive 124, the analytics metadata information 101b from device 100, and to obtain, in particular based on a request 125 and/or on a subscription, analytics data from the device 103 according to the analytics metadata information 101b obtained from device 100.

With reference to the network and devices 100, 102, 103, 105, 106, 109 shown in FIG. 1, more details and exemplary implementations are now explained.

The device 100 may be a Discovery Function (e.g., implemented in NRF) of a 5GS supporting the discovery of the collectable data from sources of collectable data, e.g. the devices 102 providing collectable date in the network, e.g., 5GS entities, such as NFs/AFs 102, (NF 102a / AF 102b) and for supporting the discovery of analytics data from an Analytics Function, e.g. the device 103 for providing analytics data.

The device 100 for discovering data in the network may particularly be adapted to:
- Receive and store the collectable data information 101a received, for instance in an advertisement, from one or more devices 102 providing collectable data (i.e., NFs 102a and/or AFs 102b and/or data storage).
- Receive and store the analytics metadata information 101b received, for instance in an advertisement, from the device 103 for providing analytics data.
- Receive a request/query 104 to retrieve collectable data information 101a from one or more devices 102, 103, 105 and/or 106 providing collectable data in the network, i.e. from one or more sources of collectable data.
- Receive a request/query from 5G entities (e.g. devices 102) providing collectable data and/or CAM or other devices seeking analytics data to retrieve analytics metadata information 101b available in 5GS.
- Receive subscription requests from e.g. OAM to be notified about changes in the status of the analytics metadata information 101b (e.g., changes in data type, collection point, data granularity, etc.).

The collectable data may generally be any information that is exposed by a producer, and can retrieved by a consumer. The collectable data information 101a may specifically be composed of at least one of: identification of the collectable data; the type of collectable data (structured/standardized, or unstructured data/non-standardized); a service from the device 102 providing the collectable data, which is to be used by the consumer to request/subscribe to the collectable data; collection point information; and/or retrieval interpretation information.

The analytics metadata information 101b may be composed of at least one of: an analytics data ID, an analytics data category ID, an analytics data type ID; a reporting/target object (e.g., "per network slice, per application, per TA"); target values (e.g., all KPIs associated with the analytics ID); target parameters (e.g., "analytics generation granularity", "interval of data collection for analytics generation", "algorithms applicable for analytics ID").

The device 103 for providing analytics data (Analytics Function) may be configured to:
- Obtain collectable data information 101b from the device 100 for discovering data.
- Use the retrieved collectable data information 101a to send a request/subscription message 107 to the device 102 providing the collectable data.
- Receives from the device 102 a response with confirmation or rejection of the request/subscription, and in case of acceptance the response shall include collection point information 108a, if the collection point information 108a was not included in the retrieved collectable data information 101b from the device 100, and retrieval interpretation information 108b, if the retrieval interpretation information 108b was not included in the retrieved collectable data information 101b from the device 100.

The collection point information 108a contains at least the following fields: a type of collection point (i.e., direct or indirect), an identification of a collection point (e.g., IP address of the collection point or IF of NF, and/or service to be invoke for retrieving the collectable data at such address), i.e., where the collectable data should be retrieved.

The retrieval interpretation information 108b can be the schema and/or parser and/or script to be used to process (e.g., calculating average value from a set of samples) and/or read (e.g., by using the schema to read the structure of the data) the collectable data.

The retrieval point is an entity where the collectable data is stored, and it can be a direct retrieval point, which means the device providing the collectable data is the same entity that stores the collectable data. Alternatively, it can be an indirect collection point, where the entity storing the collectable data, i.e. the External Collection Point (ECP), is not the same entity that generates/produce/provides the collectable data.

The device 102 for providing collectable data (source of collectable data) may configure the ECP (also referred to as "target device" to be configured) with the authorization of which entities, such as device 103, can retrieve the stored collectable data at the ECP. The configuration of the authorization can be a default configuration at the ECP, or it can be executed before the source of collectable data sends the response associated with the request/subscription for the collectable data stored at the ECP.

The device 103, after querying the device 100 and subscribing/requesting to collect data from the device 102 should have the following information: collectable data information 101a, collection point information 108a, and retrieval interpretation information 108b.

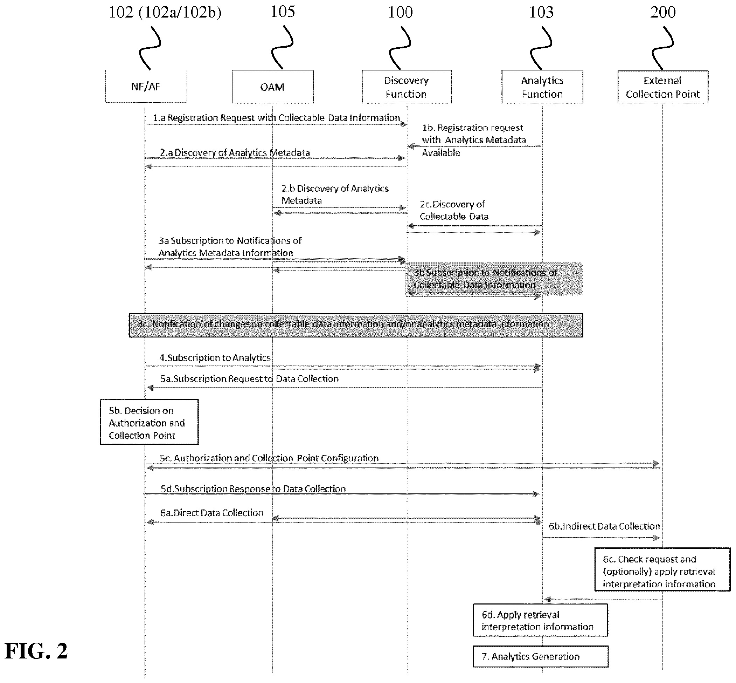

FIG. 2 shows exemplary steps of discovering collectable data information 101a and analytics metadata information 101b in a network according to the above-described. The steps are as follows:
1: These steps describe registration process of NFs /AFs (here devices 102, i.e. 102a/102b).
   1a: NF 102a and/or AF 102b sends a registration request to the Discovery Function (here device 100) including the collectable data information 101a to be provided (e.g. in an advertisement, i.e. "advertised") by such NF 102a and/or AF 102b.
   1b: Analytics Function (here device 103) sends a registration request to the Discovery Function 100 including the analytics metadata information 101b to be advertised by the Analytics Function 103.
2: These steps are related to the discovery of information by querying (i.e., sending a search request) the information stored at the Discovery Function 100.
   2a, b: NF 102a and/or AFs 102b and/or CAM (here device 105) send a query to the Discovery Function 100 searching for analytics metadata information 101b associated with the Analytics Function 103.
   2c: Analytics Function 103 queries the Discovery Function 100 searching for collectable data.
3: NF 102a and/or AF 102b and/or CAM 105 subscribe to receive from the Discovery Function 100 notifications about changes in the status of the collectable data information 10 1a as well as the analytics metadata information 101b. Eventually, changes either in collectable data information 101a or analytics metadata information 101b are updated at the Discovery Function 100, and the entities that subscribed to such changes will receive the notification message and might use such notification to adjust their operation.
   3a: NF 102a and/or AFs 102b and/or CAM 105 subscribe to receive notifications about changes related to the analytics metadata information 101b advertised/registered by Analytics Function 103 at the Discovery Function 100.
   3b: Analytics Function 103 subscribes to receive notifications about changes related to the collectable data information 101a advertised/registered by NFs/AFs 102 at the Discovery Function 100.
   3c: If changes in collectable data information 101a and/or analytics metadata information 101b occur, they are propagated to the Discovery Function 100, which will notify the entities that subscribed to receive the notification of changes related to such information and they might adapt their operations accordingly.
4: NF 102a and/or AF 102b and/or CAM 105, based on the discovered analytics metadata information 101b, subscribe to the Analytics Function 103 to receive analytics data.
5: These steps describe the process to enable the Analytics Function 103 to retrieve the collectable data associated with the collectable data information 101a queried at the Discovery Function 100.
   5a: The Analytics Functions 103 send a request to the NF 102a and/or AF 102b with the registration to retrieve one or more collectable data exposed by such NF 102a and/or AF 102 b.
   5b: NF 102a and/or AF 102b decide to accept or not the request from the Analytics Function 103, in case of acceptance, NF 102a and/or AF 102b define the collection point for the requested collectable data If the collection point information 108a is included in the collectable data information 101a used in the NF 102a and/or AF 102b registration, the NF and/or AF 102 must be consistent and decide for the same collection point information 108a advertised.
   5c: If the collection point type for the collectable data is indirect, NF 102a and/or AF 102b send to the ECP 200 the configuration to allow the Analytics Function 103 to retrieve data from the ECP 200. This configuration includes the authorization and, if necessary, the retrieval interpretation information 108b, e.g., the schema and/or parser and/or script to be used by the ECP 200 for preparing the data to be collected.
   5d: NF 102a and/or AF 102b send the subscription response to the Analytics Function 103, in case of acceptance of the subscription, the NF 102a and/or AF 102b includes in the response the collection point information 108a and/or the retrieval interpretation information 108b for each requested collectable data, if collection point information 108a and/or retrieval interpretation information 108b were not defined previously in Step 1.
6: These steps are related to the actual data collection performed by the Analytics Function 103. Analytics Function 103 should have the collectable data information 101a, the collection point information 108a, and the retrieval interpretation information 108b, in order to efficiently retrieve the collectable data.
   6a: Using the collection point information 108a, the Analytics Function 103 performs the direct data collection at NF 102a and/or AF 102b; and/or
   6b: Using the collection point information 108a, the Analytics Function 103 performs the indirect data collection at the ECP 200 (which is an entity that is not the same source of collectable data).
   6c: The ECP 200 checks if the consumer, i.e., the Analytics Function 103, is authorized to retrieve the collectable data, and if necessary the ECP 200 applies the retrieval interpretation information 108b for processing the collectable data to be sent to the Analytics Function 103. If the request received by the ECP 200 implies multiple occurrence of notifications of the collectable data, the ECP 200 is configured, if necessary, to apply for each notification the retrieval interpretation information 108b before sending the notification.
   6d: The Analytics Function 103 receives the collectable data from the collection point (NF, and/or AF 102) indicated in the collection point information 108a, and uses the retrieval interpretation information 108b to process and/or read the received collectable data.
7: The Analytics Function 103 uses the collectable data for the generation of analytics data.

Accordingly, the following enhancements and functions are proposed with respect to FIG. 2:
- A Discovery Function 100 enhanced with the capabilities to:
   ▪ Support registration including available data to be collected (collectable data information 101a) from NFs 102a and/or AFs 102b.
   ▪ Support registration including analytics metadata information 101b from an Analytics Function 103.
   ▪ Enable query of collectable data information 101a from NFs 102a and/or AFs 102b.
   ▪ Enable query of analytics (meta) data from the Analytics Function 103.
- NFs 102a and/or AFs 102b enhanced with the capabilities to:
   ▪ Generate collectable data information 101a, and included it for instance in an advertisement, which may be composed of the fields:
      - Type of data (structured/standardized, or unstructured data/non-standardized)
      - Data Format: From the list of DataTypes in TS29.571 (if structured) or Schema (if unstructured)
   ▪ Define the collection point information 108a (i.e., from where the collectable data can be fetched/retrieved) to enable direct (i.e., from the same entity advertising the collectable data) and/or indirect (i.e., from a different entity/function/storage from the entity advertising the collectable data ) data collection
      - Although a data type is produced by a given NF 102 (e.g., session information at SMF) or AF 102, based on operator's or 3^{rd} Party configuration, respectively, such data might need to be retrieved from different places, e.g., specific storages
   ▪ Define the data collection model (subscribe, request based, event based, delegation in the case of indirect collection point, etc.).
   ▪ Data collection services enhanced with:
      - Definition of retrieval interpretation information 108b that is used by the consumer of such service to process and read the collected data. Examples of such retrieval interpretation information 108b are schema and/or parser and/or script.
      - Identification of the point of collection (e.g., direct or indirect).
      - Authorization of the data collection.
- An Analytics Function 103 enhanced with the capabilities to:
   ▪ Generate analytics metadata information 101b associated with the analytics data that can be generated by such Analytics Function 103 (e.g., by enhancing the content of its registration in a Discovery Function 100).
   ▪ Query a Discovery Function 100 and/or CAM 105, in order to identify the possible standard/structured and/or non-standard/unstructured collectable data that can support the generation of analytics data.
   ▪ Acquire (e.g., by requesting or subscribing) the discovered collectable data from the indicated collection point information 108a.
   ▪ Retrieve and read the collectable data from the collection point using the retrieval interpretation information 108b.
- CAM 105 enhanced with the capabilities to:
   ▪ Adapted to query the Discovery Function 100 to retrieve information about analytics data, and/or to subscribe to changes in the metadata 101b of available analytics data from Analytics Functions 103 at the Discovery Function 100.

The main advantages, to which the above enhancements and functions lead, are:
- Reduced need for manual configuration:
   ▪ Support a more agile deployment of NFs/AFs 102 without the need to manually configure the data that can be collected from different instances, and setting up the configuration of what analytics data are available.
   ▪ In the case when administrator of the Analytics Function 103 inside the 5GS is not the same one of the OAM 105, the CAM 105 is aware of the initial configuration of the Analytics Functions 103, but CAM 105 only becomes aware of changes in the Analytics Function 103 (e.g., new types of analytics data) only if the administrator of the Analytics Function 103 personally/manually informs to the OAM administrator of such changes.
- Support for analytics using standard and non-standardized data sources and analytics output
   ▪ Discovery framework enables vendors to advertise non-standardized information for supporting analytics.
- Enables monetization of exposure of data sources for improving analytics
   ▪ Vendors can charge extra (e.g., per information advertised) for enabling their products to expose non-standardize information that improves analytics data generation.
- Enables monetization of new analytics
   ▪ Vendors can charge extra (e.g., per information advertised) for enabling their products to expose non-standardize and new available analytics to be consumed by the rest of the system

Below, some general concepts of applying embodiment of the disclosure to 3GPP 5GS based on the Rel. 15 and definitions of the Study Item for Rel. 16 on Enablers for Network Automation for 5G are now described:
- The NWDAF in 3GPP may be enhanced with the Analytics Function 103 capabilities described above.
- There are two possibilities of implementing the Discovery Function 100 described above, and the preferred implementation (explained in detail further below) is using NRF. The possible implementations are:
   ▪ NRF based alternative, where the NRF is enhanced with Discovery Function 100 capabilities.
   ▪ Network Exposure Function (NEF) based alternative, where the NEF is enhanced with Discovery Function 100 capabilities.
   ▪ Unstructured Data Storage Function (UDSF) functionalities are extended, in order to support the data discovery and collection.
- There are the following possible implementations for the services from the NFs/AFs 102 enabling the data collection with the information defined above:
   ▪ Define Nxxx_EventExposure service in the NFs and/or AFs 102, or in the case of AMF, SMF, UDM, and NEF extend this service that has been already defined in TS 23.502. The extension is related to the output of the subscription operation to include the: collection point information 108a and retrieval interpretation information 108b.
   ▪ Extend the NF<X>_DataCollection service defined in TR 23.791 to include in the subscription response the collection point information 108a and retrieval interpretation information 108b.
   ▪ The Nudsf_UnstructuredDataManagement service operations from UDSF are extended, in order to allow the NF 102 that creates the record to store the collectable data to indicate the NFs 102 authorized to query the specific data, as well as to indicate the retrieval interpretation information to be used for the collectable data information to be stored at UDSF.

The following detailed description of embodiments according to the disclosure is based on the above-mentioned preferred implementation of the device 100 in the NRF, i.e. the NRF 100 based alternative.

The collection point information 108a may be implemented as:
- Collection point type, e.g. direct, indirect (collectionPointType)
- Identification of the collection point (collectionPointID); possible implementations of this are:
   ▪ NF/AF/further-extemal collection point ID (e.g.) + service ID (e.g., URL for invoking the service at the collection point).
   ▪ Service ID (e.g., URL for invoking the service at the collection point).
   ▪ Reference point, protocol, method, and address of entity to be contacted via reference point.

The retrieval point information 108b may be implemented as:
- Interpreter ID, identifies one interpreter available to be applied to the collectable data.
- Interpreter Type: defines the type of interpreter and examples of interpreters types are: parsers, schema, script.
- Interpreter reference: the actual document/file/software associated with the interpreter ID.

The collectable data information 101a and/or the analytics metadata information 101b may be included in an advertisement and may be implemented by:
- Extend the NF Profile currently defined in TS 23.502 and TS 29.510 to support:
   ▪ Collectable data information 101a, which is composed of:
      - Identification of the service that the consumer of the collectable data must request/subscribe/register to have access/authorization to the collectable data (collectionServiceID).
      - Data Identification (cdataID).
      - Data Type, e.g., structured/unstructured (cdataType).
      - Collection point (optional).
      - Retrieval interpreter information (optional)
   ▪ Analytics metadata information 101b, which is composed of:
      - Analytics ID, which is a number assigned to identify one analytics that can be generated by the NWDAF 103.
      - Analytics category ID, which is assigned to a possible analytics category, where the analytics category information was previously defined in PCT/EP2018/071679.
      - Analytics Type ID, which is associated with the nature of the NWDAF 103 output, which can be either analytics or recommendation as defined in TR 23.791 and further detailed in PCT/EP2018/071679.
      - Reporting/target object, which is a description of objects to be analyzed by NWDAF 103 for the generation of the analytics data. The target object information has been defined in PCT/EP2018/071679, and examples of embodiment for this information are: "per network slice, per application, per TA".
      - Target values, which define the information/KPIs that NWDAF 103 can be generated for the analytics ID, examples of target values are network load, UE experience satisfaction, etc. as defined in PCT/EP2018/071679.
      - Target parameters, which define the parameters that can be customized for the generation of the analytics ID, e.g., analytics generation periodicity, interval of data collection for analytics generation, algorithms applicable for analytics ID, etc.

The query 104 for the collectable data information 101a and/or analytics metadata information 101b may be implemented by:
- The *Get operation from the NRF service Nnrf NFDiscovery* is extended to support, respectively, the discovery/query of collectable data information 101a as well as analytics metadata information 101b. The list of query parameters defined Table 6.2.3.2.3.1-1 in TS 29.510 may be extended with the following new parameters:
   ▪ cdataID
   ▪ cdataType
   ▪ collectionPointType
   ▪ collectionPointID
   ▪ analyticsID
   ▪ analyticsCategoryID
   ▪ analyticsTypeID
   ▪ analyticsTargetObject
   ▪ analyticsTargetValues
   ▪ analyticsTargetParameters

Some general definitions in this context for discovery of collectable data and analytics data considering the NRF-based implementation are:
- Data to be collected by NWDAF 103 may include:
   ▪ CData#1: Extended session management information produced by SMF and the collection point is the UDSF. Such information is unstructured/non-standardized data, and such collectable data has as a script as its retrieval interpretation information 108b.
   ▪ CData#2: UE Mobility information directly from AMF.
   ▪ CData#3: Service experience from AF.
- The collection point information, as well as the retrieval interpretation information 108b, may be included in the NF Profile 101 registration.

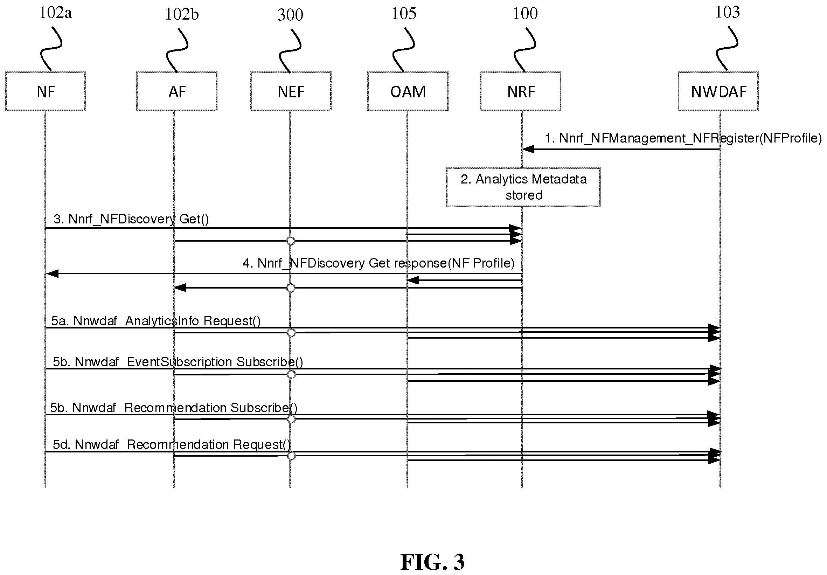

FIG. 3 shows an exemplary procedure for analytics metadata information 101b registration by NWDAF 103, and for NFs/AFs 102 and OAM 105 discovery/querying analytics metadata information 101b at the NRF 100. The procedure includes the following steps:
1. NWDAF 103 uses the Nnrf_NFManagement_NFRegister service operation from NRF 100 to register itself at NRF 100. The NFProfile information 101 includes the analytics metadata information 101b.
2. NRF 100 stores the analytics metadata information 101b from NWDAF 103, which was included in the NF Profile 101.
3. NF and/or AF 102 and/or OAM 105 uses the Nrf_NFDiscovery Get service operation from NRF 100 to search for information about NWDAF NF and its analytics metadata.
4. NRF 100 sends the request response including the NF Profile 101 of NWDAF 103 and its associated analytics metadata information 101b.
5. Using the analytics metadata information 101b of the NWDAF NF Profile 101 received from the NRF 100, NF and/or AF 102 and/or OAM 105 use the services offered by NWDAF 103 (Nnwdaf_AnalyticsInfo, or Nnwdaf_EventSubscription, or Nnwdaf_Recommendation) as defined in 3 GPP TR 23.791 to request/subscribe to receive analytics data or recommendations fromNWDAF 103.

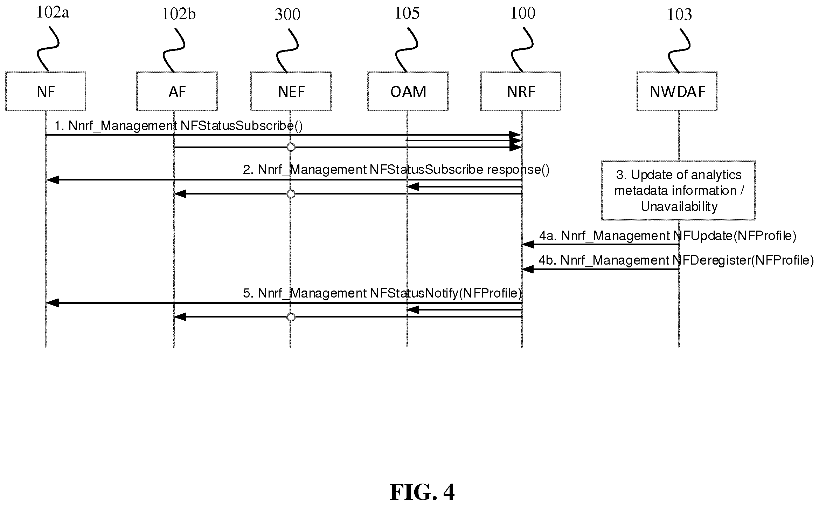

FIG. 4 shows a procedure for NFs/AFs 102 and OAM 105 subscribing to receive notifications about changes in analytics metadata information 101b at NRF 100. The procedure includes the following steps:
1. NF and/or AF 102 and/or OAM 105 uses the Nrf_ NFManagement NFStatusSubscribe service operation from NRF 100 to subscribe to receive updates in analytics metadata information from NWDAF NF Profile 101.
2. NRF 100 sends the request response including the identification of ID of the subscription.
3. The analytics metadata information 101b of NWDAF 103 is updated and/or there is an availability in NWDAF 103, which requires its de-registration from the NRF 100.
4. NWDAF 103 informs NRF 100 about any changes.
   4a. NWDAF 103 uses Nrf_NFManagement NFUpdate service operation from NRF 100 to update its analytics metadata information 101b.
   4b. NWDAF 103 uses the Nnrf_NFManagement_NFDeregister service operation from NRF 100 to indicate its unavailability.
5. NRF 100 uses the Nrf_NFManagement NFStatusNotify service operation to send the notification about changes of NWDAF 103 to the NFs and/or AFs 102 and/or OAM 105 that subscribed to receive such notifications

Notably, in case that the AF 102 is not allowed by operator to directly access the NFs 102, the interaction may happen via NEF 300.

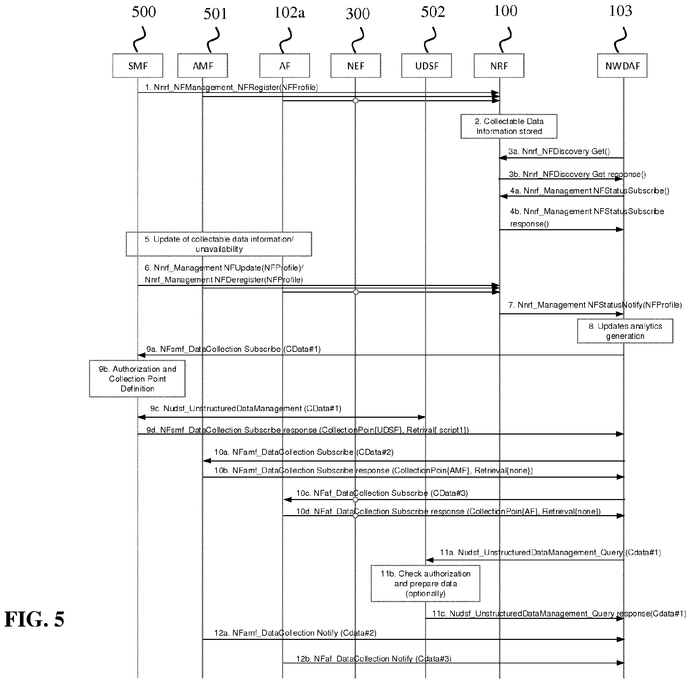

FIG. 5 shows a procedure for collectable data information registration by NFs/AFs 102, for NWDAF 103 discovering/querying collectable data information at NRF 100, and for data collection by NWDAF 103. The procedure includes the following steps:
1. NFs/AFs 102 use the Nnrf_NFManagement_NFRegister service operation from NRF 100 to register itself at NRF 100. The NFProfile information includes the collectable data information. In this embodiment:
   - SMF 500 is an NF that registers the collectable data CData#1 at NRF 100.
   - AMF 501 is an NF that registers the collectable data CData#2 at NRF 100.
   - AF 102 registers the collectable data CData#3 at NRF 100.
2. NRF 100 stores the collectable data information 101a from NF/AF 102, which was included in the NF Profile 101.
3. NWDAF 103 discovers the collectable data from SMF 500, AMF 501, and AF 102.
   3a. NWDAF 103 uses the Nrf_NFDiscovery Get service operation from NRF 100 to search for information about collectable data information 101a from SMF 500, AMF 501, and AF 102.
   3b. NRF 100 sends the request response including the NF Profile 101 of SMF 500, AMF 501, AF 102 and their associated collectable data information 101a.
4. NWDAF 103 subscribes to receive notification about changes in the collectable data information 101a.
   4a. NWDAF 103 uses the Nrf_NFManagement NFStatusSubscribe service operation from NRF 100 to subscribe to receive updates in collectable data information 101a from NF / AF NF Profile 101.
   4b. NRF 100 sends the request response including the identification of ID of the subscription.
5. The collectable data information 101b of NF 102 and/or AF 102 is updated and/or there is an availability in NF and/or AF 102 which requires its de-registration from NRF 100.
6. NF/AF 102 inform NRF 100 about any changes. NF 102a and/or AF 102b uses Nrf_NFManagement NFUpdate service operation from NRF 100 to update its analytics metadata information 101b; or NF 102a and/or AF 102b uses the Nnrf_NFManagement_NFDeregister service operation from NRF 100 to indicate its unavailability.
7. NRF 100 uses the Nrf_NFManagement NFStatusNotify service operation to send the notification about changes of NFs 102a and/or AFs 102b to NWDAF 103, which subscribed to receive such notifications.
   Notably, in case that AF 102b is not allowed by operator to directly access the NFs 102a, the interaction will happen via NEF 300.
8. NWDAF 103 uses the information from Nrf_NFManagement NFStatusNotify service operation to update the generation of analytics, if required.
   Notably, steps 5-8 can happen at any time that a change in the collectable data information 101b happens.
9. This step shows the interactions in case of indirect collection point type:
   9a. NWDAF 103 uses the NFsmf_DataCollection Subscribe service operation from SMF 500 to subscribe to receive the collectable data CData#1.
   9b. SMF 500 performs the authorization and check which kind of collection point should be used by NWDAF 103 for the collection of CData#1.
   9c. SMF 500 uses the Nudsf_UnstructuredDataManagement service operations from UDSF 502 for authorizing NWDAF 103 to retrieve the collectable data CData#1 from UDSF 502. In this embodiment, there is no need forUDFS 502 to apply any retrieval interpretation information 108b whenNWDAF 103 requests the CData#1.
   9d. SMF 500 uses the NFsmf_DataCollection Subscribe response service operation to confirm to NWDAF 103 that it can collect the requested data including the collection point information 108a and the retrieval interpretation information 108b in such response.
10. This step shows the interactions between NWDAF 103, AMF 501, AF 102 for the direct collection point type:
   10a. NWDAF 103 uses the NFamf_DataCollection Subscribe service operation from AMF 501 to subscribe to receive the collectable data CData#2.
   10b. AMF 501 response confirms to NWDAF 103 that it can collect the requested data including the collection point information 108a (AMF 501 itself) and the retrieval interpretation information 108b (none, because it is a standardized information) in such response.
   10c. NWDAF 103 uses the NFamf_DataCollection Subscribe service operation from AF 102 to subscribe to receive the collectable data CData#3.
   10d. AF 102 response confirms to NWDAF 103 that it can collect the requested data including the collection point information 108a (AF 102 itself) and the retrieval interpretation information 108b (none, because it is a standardized information) in such response.
11. This step describes the NWDAF 103 interactions to perform the indirect collection:
   11a. NWDAF 103 uses the Nudsf_UnstructuredDataManagement_Query service operation from UDSF 502 to request the CData#1.
   11b. UDSF 502 checks whether NWDAF 103 is authorize to collect the CData#1
   11c. UDSF 502 sends the requested CData#1 to NWDAF 103.
12. This step describes the NWDAF 103 interactions to perform the direct collection
   12a. AMF 501 uses 12a. NFamf_ DataCollection Notify service operation to send CData#2 to NWDAF 103.
   12b. AMF 501 uses 12a. NFaf_DataCollection Notify service operation to send CData#3 to NWDAF 103.

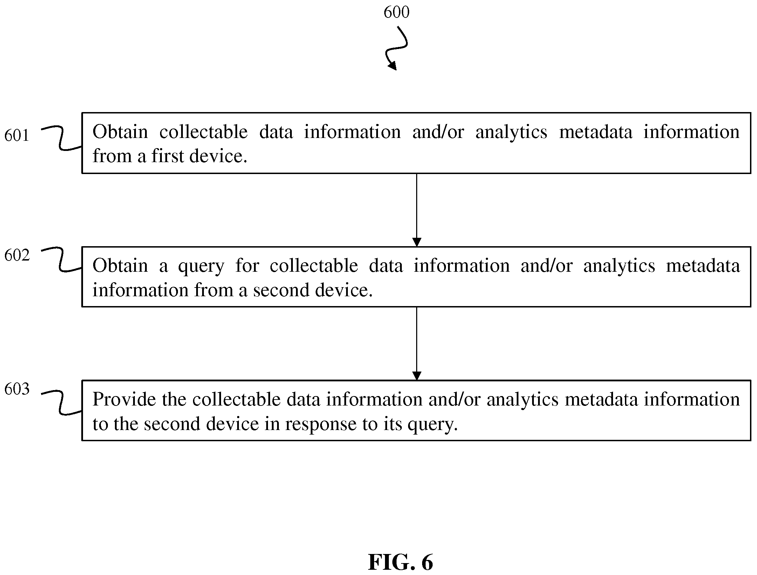

FIG. 6 shows a method 600 according to an embodiment of the disclosure, wherein the method 600 is for discovering data in a network. The method 600 comprises: a step 601 of obtaining collectable data information 101b and/or analytics metadata information 101b from a first device 102, 103; a step 602 of receiving a query 104 for collectable data information 101a and/or analytics metadata information 101b from a second device 105 (and/or 102, 103 and/or 106); and a step 603 of providing the collectable data information 101a and/or analytics metadata information 101b received from the first device 102, 103 to the second device 105 (and/or 102, 103, and/or 106) in response to its query 104. The method 600 may be performed by the device 100, e.g. NRF 100.

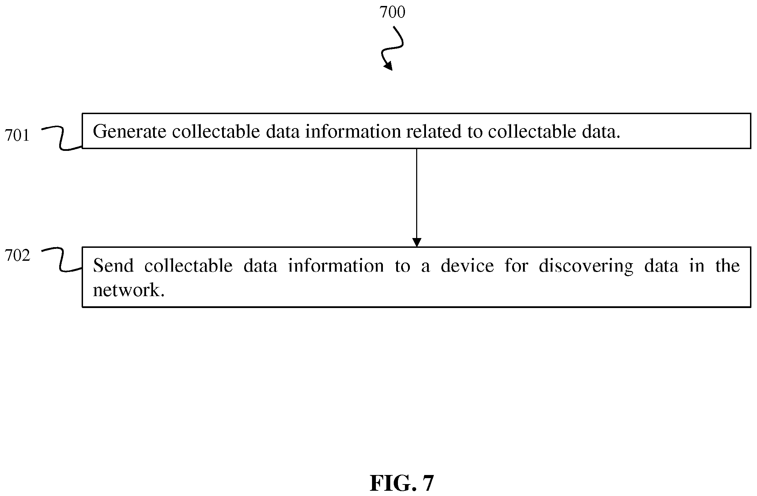

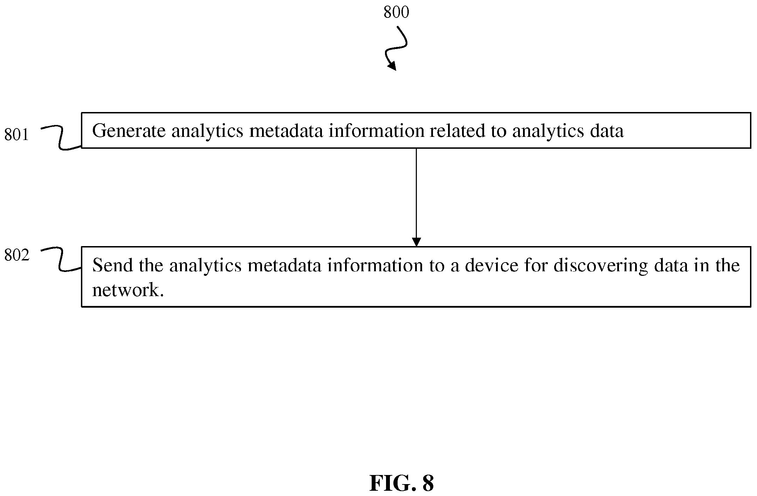

FIG. 7 shows a method 700 according to an embodiment of the disclosure, wherein the method 700 is for providing collectable data in a network. The method 700 comprises: a step 701 of generating collectable data information 101a related to the collectable data; and a step 702 of sending the collectable data information 101a to a device 100 for discovering data in the network. The method 700 may be performed by the device 102, e.g. NF 102a or AF 102b. FIG. 8 shows a method 800 according to an embodiment of the disclosure not covered by the claims, wherein the method 800 is for providing analytics data in a network. The method 800 comprises: a step 801 of generating analytics metadata information 101b related to the analytics data; and a step 802 of sending the analytics metadata information 101b to a device 100 for discovering data in the network. The method 800 may be performed by the device 103, e.g. NWDAF 103.

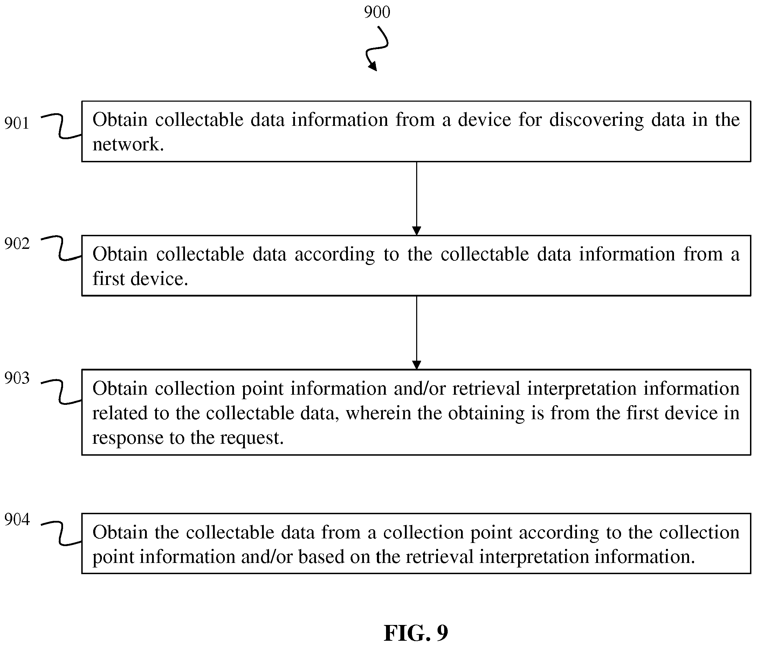

FIG. 9 shows a method 900 according to an embodiment of the disclosure, wherein the method 900 is for seeking collectable data in a network. The method 900 comprises: a step 901 of obtaining, for example querying and receiving, collectable data information 101a from a device 100 for discovering data in the network; a step 902 of obtaining, for example by sending a request 107 for, collectable data according to the collectable data information 101a from a first device 102, 103; a step 903 of obtaining collection point information 108a and/or retrieval interpretation information 108b related to the collectable data, wherein the obtaining is from the first device 102, 103 in response to the request 107; and a step 904 of obtaining the collectable data from a collection point according to the collection point information 108a and/or based on the retrieval interpretation information 108b. The method 900 may be performed by the device 106, e.g. an NWDAF.

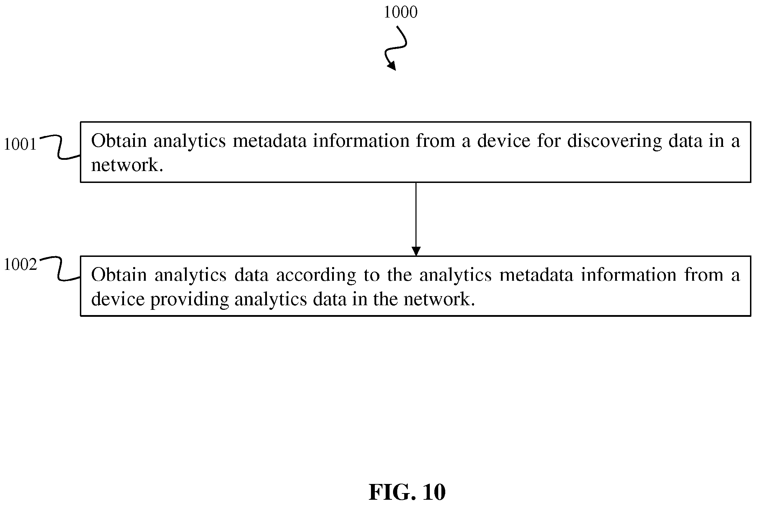

FIG. 10 shows a method 1000 according to an embodiment of the disclosure not covered by the claims, wherein the method 1000 is for seeking analytics data in a network. The method 1000 comprises: a step 1001 of obtaining, for example querying and receiving, analytics metadata information 101b from a device 100 for discovering data in the network; and a step 1002 of obtaining, for example by sending a request for, analytics data according to the analytics metadata information 101b from a device 103 providing analytics data in the network. The method 1000 may be performed by device 105, e.g. an OAM 105.

The present disclosure has been described in conjunction with various embodiments as examples as well as implementations. However, other variations can be understood and effected by those persons skilled in the art and practicing the claimed invention, from the studies of the drawings, this disclosure and the independent claims. In the claims, as well as in the description, the word "comprising" does not exclude other elements or steps and the indefinite article "a" or "an" does not exclude a plurality. A single element or another unit may fulfill the functions of several entities or items recited in the claims. The mere fact that certain measures are recited in the mutual different dependent claims does not indicate that a combination of these measures cannot be used in an advantageous implementation.

## Claims

1. A device (100) for discovering data in a network, wherein the device (100) is implemented as a Network Repository Function, NRF, configured to:
receive collectable data information (101a) related to collectable data from at least one first device (102) providing the collectable data, wherein the collectable data information allows both standard and non-standard collectable data to be identified, the collectable data comprises at least one of standard and non-standard collectable data, and the at least one first device (102) is implemented as a Network Function, NF, and/or an Application Function, AF;
receive a first query (104) for collectable data information from a second device (102, 103, 106, 105) seeking collectable data in the network; and
provide the collectable data information (101a) to the second device (105, 102, 103, 106) in response to the first query (104).

2. The device (100) according to claim 1, wherein the second device (103, 106) is implemented as a Network Data Analytics Function, NWDAF.

3. The device (100) according to claim 1 or 2, further configured to:
provide a first notification (110) about a change in the status and/or availability of the collectable data information (101a) to the second device (102, 103, 105).

4. The device (100) according to any one of claims 1 to 3, further configured to:
receive analytics metadata information (101b) from a third device (103), wherein the third device (103) is implemented as a Network Data Analytics Function, NWDAF;
receive a second query (104) for analytics metadata information from a fourth device (102, 103, 106, 105);
provide the analytics metadata information (101b) to the fourth device (105, 102, 103, 106) in response to the second query (104); and
optionally, provide a second notification (110) about a change in the status and/or availability of the analytics metadata (101b) information to the fourth device (102, 103, 105).

5. The device (100) according to claim 4, wherein the analytics metadata information (101b) indicates related analytics data.

6. The device (100) according to claim 4 or 5, wherein the analytics metadata information (101b) includes an identification of related analytics data, a category of the analytics data, and/or a type of the analytics data.

7. A device (102) for providing collectable data in a network, wherein the device (102) is implemented as a Network Function, NF, or an Application Function, AF, being configured to:
generate collectable data information (101a) related to the collectable data, wherein the collectable data information allows both standard and non-standard collectable data to be identified, and the collectable data comprises at least one of standard and non-standard collectable data; and
send the collectable data information to a device (100) for discovering data in the network, wherein the device (100) is implemented as a Network Repository Function, NRF.

8. The device (102) according to claim 7, further configured to:
receive a request (107) for collectable data based on the collectable data information from a second device (106, 103, 105) seeking collectable data in the network; and
provide (118) collection point information (108a) related to the collectable data to the second device (106, 103, 105) in response to the request (107), wherein the collection point information (108a) indicates from where the related collectable data can be obtained; and
optionally, configure (119) a target device (200) that is to receive data from the device (102).

9. The device (100, 102, 103, 105, 106) according to claim 8,
wherein the collection point information (108a) includes:
a type of a related collection point, and
an identification of the related collection point.

10. The device (102) according to any of claims 7 to 9, further configured to:
receive a request (107) for collectable data based on the collectable data information (101a) from a second device (105, 106, 103); and
provide retrieval interpretation information (108b) related to the collectable data to the second device (105, 106, 103) in response to the request (107); and/or
provide retrieval interpretation information (108b) for the configuration of a target device (200).

11. The device (100, 102, 103, 105, 106) according to claim 10, wherein
the retrieval interpretation information (108b) indicates how related collectable data can be read and/or processed; and/or
the retrieval interpretation information (108b) includes at least one of:
an identification of an interpreter applicable to related collectable data,
an interpreter type, and
an interpreter reference.

12. The device (100, 102, 103, 105, 106) according to one of the claims 1 to 11, wherein the collectable data information (101a) indicates related collectable data and/or how this related collectable data can be obtained.

13. The device (100, 102, 103, 105, 106) according to one of the claims 1 to 12, wherein the collectable data information (101a) includes an identification of related collectable data.

14. A system, comprising a device (100) for discovering data in a network according to one of claims 1 to 6 or 12 to 13, when referring back to any one of claims 1 to 6, and a device (103) for providing analytics data in the network, the device (103) for providing analytics data in the network being configured to:
generate analytics metadata information (101b) related to analytics data; and
send the analytics metadata information (101b) to the device (100) for discovering data in the network.

15. The system of claim 14, further comprising a device (109) for seeking analytics data in the network, the device (109) being configured to:
obtain analytics metadata information (101b) from the device (100) for discovering data in the network; and
obtain analytics data from the device (103) for providing analytics data in the network according to the analytics metadata information (101b).

16. A system, comprising a device (100) for discovering data in a network according to one of claims 1 to 6 or 12 to 13, when referring back to any one of claims 1 to 6, and a device (106) for seeking collectable data in the network, the device (106) for seeking collectable data in the network being configured to:
obtain collectable data information (101a) from the device (100) for discovering data in the network;
obtain collectable data according to the collectable data information (101a) from the at least one first device (102);
receive (118) collection point information (108a) and/or retrieval interpretation information (108b) related to the collectable data from the at least one first device (102) in response to the request (107); and
obtain the collectable data from a collection point according to the collection point information (108a) and/or based on the retrieval interpretation information (108b).

17. The system according to claim 16, wherein the device (106) for seeking collectable data in the network is further configured to:
obtain the collectable data from the at least one first device (102), if the collection point according to the collection point information (108a) is a direct collection point; and/or
obtain the collectable data from another device (200), if the collection point according to the collection point information (108a) is an indirect collection point; and/or
obtain the collectable data from the at least one first device (102), to which the request (107) was sent, if the collection point according to the collection point information (108a) is a direct collection point; and/or
obtain (122) the collectable data from another device (200), which the request (107) was not sent to.

18. A method (600) for discovering data in a network, the method (600) comprising:
obtaining (601), by a device (100) for discovering data in the network, wherein the device (100) is implemented as a Network Repository Function, NRF, collectable data information (101a) related to collectable data from at least one first device (102, 103) providing the collectable data, wherein the collectable data information allows both standard and non-standard collectable data to be identified, the collectable data comprises at least one of standard and non-standard collectable data, and the at least one first device (102) is implemented as a Network Function, NF, and/or an Application Function, AF;
obtaining (602), by the device (100) for discovering data in the network, a query (104) for collectable data information (101a) from a second device (102, 103, 105, 106, 107) seeking collectable data in the network; and
providing (603), by the device (100) for discovering data in the network, the collectable data information (101a) to the second device(105) in response to the query (104).

19. A method (700) for providing collectable data in a network, the method (700) comprising:
generating (701), by a Network Function, NF, or an Application Function, AF, collectable data information (101a) related to the collectable data, wherein the collectable data information allows both standard and non-standard collectable data to be identified, and the collectable data comprises at least one of standard and non-standard collectable data; and
sending (702), by the Network Function, NF, or the Application Function, AF, respectively, the collectable data information (101a) to a device (100) for discovering data in the network, wherein the device (100) is implemented as a Network Repository Function, NRF.

## Patentansprüche

1. Vorrichtung (100) zur Entdeckung von Daten in einem Netzwerk, wobei die Vorrichtung (100) als eine Network Repository Function, NRF, implementiert ist, die konfiguriert ist zum:
Empfangen von sammelbaren Dateninformationen (101a), die sich auf sammelbare Daten beziehen, von mindestens einer ersten Vorrichtung (102), die die sammelbaren Daten bereitstellt, wobei die sammelbaren Dateninformationen es zulassen, dass sowohl standardmäßige als auch nicht standardmäßige sammelbare Daten identifiziert werden, wobei die sammelbaren Daten mindestens eines von standardmäßigen und nicht standardmäßigen sammelbaren Daten umfassen, und die mindestens eine erste Vorrichtung (102) als eine Netzwerkfunktion, NF, und/oder eine Anwendungsfunktion, AF, implementiert ist;
Empfangen einer ersten Anfrage (104) nach sammelbaren Dateninformationen von einer zweiten Vorrichtung (102, 103, 106, 105), die in dem Netzwerk nach sammelbaren Daten sucht; und Bereitstellen der sammelbaren Dateninformationen (101a) an die zweite Vorrichtung (105, 102, 103, 106) als Antwort auf die erste Anfrage (104).

2. Vorrichtung (100) nach Anspruch 1, wobei die zweite Vorrichtung (103, 106) als eine Network Data Analytics Function, NWDAF, implementiert ist.

3. Vorrichtung (100) nach Anspruch 1 oder 2, ferner konfiguriert zum:
Bereitstellen einer ersten Benachrichtigung (110) über eine Änderung des Status und/oder der Verfügbarkeit der sammelbaren Dateninformationen (101a) an die zweite Vorrichtung (102, 103, 105) .

4. Vorrichtung (100) nach einem der Ansprüche 1 bis 3, ferner konfiguriert zum:
Empfangen von Analyse-Metadaten-Informationen (101b) von einer dritten Vorrichtung (103), wobei die dritte Vorrichtung (103) als eine Network Data Analytics Function, NWDAF, implementiert ist;
Empfangen einer zweiten Anfrage (104) nach Analyse-Metadaten-Informationen von einer vierten Vorrichtung (102, 103, 106, 105);
Bereitstellen der Analyse-Metadaten-Informationen (101b) an die vierte Vorrichtung (105, 102, 103, 106) als Antwort auf die zweite Anfrage (104); und
optional Bereitstellen einer zweiten Benachrichtigung (110) über eine Änderung des Status und/oder der Verfügbarkeit der Analyse-Metadaten-Informationen (101b) an die vierte Vorrichtung (102, 103, 105).

5. Vorrichtung (100) nach Anspruch 4, wobei die Analyse-Metadaten-Informationen (101b) verwandte Analysedaten anzeigen.

6. Vorrichtung (100) nach Anspruch 4 oder 5, wobei die Analyse-Metadaten-Informationen (101b) eine Identifikation der zugehörigen Analysedaten, eine Kategorie der Analysedaten und/oder einen Typ der Analysedaten beinhalten.

7. Vorrichtung (102) zum Bereitstellen von sammelbaren Daten in einem Netzwerk, wobei die Vorrichtung (102) als eine Netzwerkfunktion, NF, oder eine Anwendungsfunktion, AF, implementiert ist, die konfiguriert ist zum:
Erzeugen von sammelbaren Dateninformationen (101a), die sich auf die sammelbaren Daten beziehen, wobei die sammelbaren Dateninformationen es zulassen, dass sowohl standardmäßige als auch nicht standardmäßige sammelbare Daten identifiziert werden, und die sammelbaren Daten mindestens eines von standardmäßigen und nicht standardmäßigen sammelbaren Daten umfassen; und
Senden der sammelbaren Dateninformationen an eine Vorrichtung (100) zur Entdeckung von Daten in dem Netzwerk, wobei die Vorrichtung (100) als eine Network Repository Function, NRF, implementiert ist.

8. Vorrichtung (102) nach Anspruch 7, ferner konfiguriert zum:
Empfangen einer Anforderung (107) nach sammelbaren Daten auf der Grundlage der sammelbaren Dateninformationen von einer zweiten Vorrichtung (106, 103, 105), die nach sammelbaren Daten in dem Netzwerk sucht; und
Bereitstellen (118) von Sammelpunktinformationen (108a), die sich auf die sammelbaren Daten beziehen, für die zweite Vorrichtung (106, 103, 105) als Antwort auf die Anforderung (107), wobei die Sammelpunktinformationen (108a) anzeigen, von wo die zugehörigen sammelbaren Daten erhalten werden können; und
optional Konfigurieren (119) einer Zielvorrichtung (200), die Daten von der Vorrichtung (102) empfangen soll.

9. Vorrichtung (100, 102, 103, 105, 106) nach Anspruch 8, wobei die Sammelpunktinformationen (108a) beinhalten:
einen Typ eines zugehörigen Sammelpunkts, und
eine Identifizierung des zugehörigen Sammelpunkts.

10. Vorrichtung (102) nach einem der Ansprüche 7 bis 9, ferner konfiguriert zum:
Empfangen einer Anforderung (107) nach sammelbaren Daten auf der Grundlage der sammelbaren Dateninformationen (101a) von einer zweiten Vorrichtung (105, 106, 103); und
Bereitstellen von Abrufinterpretationsinformationen (108b), die sich auf die sammelbaren Daten beziehen, für die zweite Vorrichtung (105, 106, 103) als Antwort auf die Anforderung (107); und/oder
Bereitstellen von Abrufinterpretationsinformationen (108b) für die Konfiguration einer Zielvorrichtung (200).

11. Vorrichtung (100, 102, 103, 105, 106) nach Anspruch 10, wobei
die Abrufinterpretationsinformationen (108b) anzeigen, wie zugehörige sammelbare Daten gelesen und/oder verarbeitet werden können; und/oder
die Abrufinterpretationsinformationen (108b) mindestens eines der Folgenden beinhalten:
eine Identifikation eines Interpreten, der auf die zugehörigen sammelbaren Daten anwendbar ist,
einen Interpretentyp, und
eine Interpretenreferenz.

12. Vorrichtung (100, 102, 103, 105, 106) nach einem der Ansprüche 1 bis 11, wobei die sammelbaren Dateninformationen (101a) sammelbaren Daten anzeigen und/oder wie diese sammelbaren Daten erhalten werden können.

13. Vorrichtung (100, 102, 103, 105, 106) nach einem der Ansprüche 1 bis 12, wobei die sammelbaren Dateninformationen (101a) eine Identifikation von zugehörigen sammelbaren Daten beinhalten.

14. System, umfassend eine Vorrichtung (100) zur Entdeckung von Daten in einem Netzwerk nach einem der Ansprüche 1 bis 6 oder 12 bis 13, wenn auf einen der Ansprüche 1 bis 6 Bezug genommen wird, und eine Vorrichtung (103) zum Bereitstellen von Analysedaten in dem Netzwerk, wobei die Vorrichtung (103) zum Bereitstellen von Analysedaten in dem Netzwerk konfiguriert ist zum:
Erzeugen von Analyse-Metadaten-Informationen (101b), die sich auf die Analysedaten beziehen; und
Senden der Analyse-Metadaten-Informationen (101b) an die Vorrichtung (100) zur Entdeckung von Daten in dem Netzwerk.

15. System nach Anspruch 14, ferner umfassend eine Vorrichtung (109) zum Suchen von Analysedaten in dem Netzwerk, wobei die Vorrichtung (109) konfiguriert ist zum:
Erhalten der Analyse-Metadaten-Informationen (101b) von der Vorrichtung (100) zur Entdeckung von Daten in dem Netzwerk; und
Erhalten von Analysedaten von der Vorrichtung (103) zum Bereitstellen von Analysedaten in dem Netzwerk gemäß den Analyse-Metadaten-Informationen (101b).

16. System, umfassend eine Vorrichtung (100) zur Entdeckung von Daten in einem Netzwerk nach einem der Ansprüche 1 bis 6 oder 12 bis 13, wenn auf einen der Ansprüche 1 bis 6 Bezug genommen wird, und eine Vorrichtung (106) zum Suchen von sammelbaren Daten in dem Netzwerk, wobei die Vorrichtung (106) zum Suchen von sammelbaren Daten in dem Netzwerk konfiguriert ist zum:
Erhalten von sammelbaren Dateninformationen (101a) von der Vorrichtung (100) zur Erkennung von Daten in dem Netzwerk;
Erhalten von sammelbaren Daten entsprechend den sammelbaren Dateninformationen (101a) von der mindestens einen ersten Vorrichtung (102);
Empfangen (118) von Sammelpunktinformationen (108a) und/oder Abrufinterpretationsinformationen (108b), die sich auf die sammelbaren Daten beziehen, von der mindestens einen ersten Vorrichtung (102) als Antwort auf die Anforderung (107); und
Erhalten der sammelbaren Daten von einem Sammelpunkt entsprechend den Sammelpunktinformationen (108a) und/oder basierend auf den Abrufinterpretationsinformationen (108b).

17. System nach Anspruch 16, wobei die Vorrichtung (106) zum Suchen von sammelbaren Daten in dem Netzwerk ferner konfiguriert ist zum:
Erhalten der sammelbaren Daten von der mindestens einen ersten Vorrichtung (102), wenn der Sammelpunkt entsprechend den Sammelpunktinformationen (108a) ein direkter Sammelpunkt ist; und/oder
Erhalten der sammelbaren Daten von einer anderen Vorrichtung (200), wenn der Sammelpunkt entsprechend den Sammelpunktinformationen (108a) ein indirekter Sammelpunkt ist; und/oder
Erhalten der sammelbaren Daten von der mindestens einen ersten Vorrichtung (102), an die die Anforderung (107) gesendet wurde, wenn der Sammelpunkt entsprechend den Sammelpunktinformationen (108a) ein direkter Sammelpunkt ist; und/oder
Erhalten (122) der sammelbaren Daten von einer anderen Vorrichtung (200), an welche die Anforderung (107) nicht gesendet wurde.

18. Verfahren (600) zur Entdeckung von Daten in einem Netzwerk, wobei das Verfahren (600) Folgendes umfasst:
Erhalten (601), durch eine Vorrichtung (100) zur Entdeckung von Daten in dem Netzwerk, wobei die Vorrichtung (100) als eine Network Repository Function, NRF, implementiert ist, von sammelbaren Dateninformationen (101a), die sich auf sammelbare Daten beziehen, von mindestens einer ersten Vorrichtung (102, 103), die die sammelbaren Daten bereitstellt, wobei die sammelbaren Dateninformationen es zulassen, dass sowohl standardmäßige als auch nicht standardmäßige sammelbare Daten identifiziert werden, wobei die sammelbaren Daten mindestens eines von standardmäßigen und nicht standardmäßigen sammelbaren Daten umfassen, und die mindestens eine erste Vorrichtung (102) als eine Netzwerkfunktion, NF, und/oder eine Anwendungsfunktion, AF, implementiert ist;
Erhalten (602), durch die Vorrichtung (100) zur Entdeckung von Daten in dem Netzwerk, einer Anfrage (104) nach sammelbaren Dateninformationen (101a) von einer zweiten Vorrichtung (102, 103, 105, 106, 107), die sammelbare Daten in dem Netzwerk sucht; und
Bereitstellen (603), durch die Vorrichtung (100) zur Entdeckung von Daten in dem Netzwerk, der sammelbaren Dateninformationen (101a) an die zweite Vorrichtung (105) als Antwort auf die Anfrage (104).

19. Verfahren (700) zur Bereitstellung von sammelbaren Daten in einem Netzwerk, wobei das Verfahren (700) Folgendes umfasst:
Erzeugen (701), durch eine Netzwerkfunktion, NF, oder eine Anwendungsfunktion, AF, von sammelbaren Dateninformationen (101a), die sich auf die sammelbaren Daten beziehen, wobei die sammelbaren Dateninformationen es zulassen, dass sowohl standardmäßige als auch nicht standardmäßige sammelbare Daten identifiziert werden können, und die sammelbaren Daten mindestens eines von standardmäßigen und nicht standardmäßigen sammelbaren Daten umfassen; und
Senden (702), durch die Netzwerkfunktion, NF, bzw. die Anwendungsfunktion, AF, der sammelbaren Dateninformationen (101a) an eine Vorrichtung (100) zur Entdeckung von Daten in dem Netzwerk, wobei die Vorrichtung (100) als eine Network Repository Function, NRF, implementiert ist.

## Revendications

1. Dispositif (100) permettant de découvrir des données dans un réseau, dans lequel le dispositif (100) est mis en œuvre en tant que Fonction de Référentiel de Réseau, NRF, configuré pour :
recevoir des informations de données collectables (101a) associées à des données collectables depuis au moins un premier dispositif (102) fournissant les données collectables, dans lequel les informations de données collectables permettent d'identifier à la fois des données collectables standard et non standard, les données collectables comprennent au moins les unes parmi des données collectables standard et non standard, et l'au moins un premier dispositif (102) est mis en œuvre en tant que Fonction Réseau, NF, et/ou une Fonction d'Application, AF ;
recevoir une première requête (104) pour des informations de données collectables depuis un deuxième dispositif (102, 103, 106, 105) recherchant des données collectables dans le réseau ; et
fournir les informations de données collectables (101a) au deuxième dispositif (105, 102, 103, 106) en réponse à la première requête (104).

2. Dispositif (100) selon la revendication 1, dans lequel le deuxième dispositif (103, 106) est mis en œuvre en tant que Fonction d'Analyse de Données Réseau, NWDAF.

3. Dispositif (100) selon la revendication 1 ou 2, configuré en outre pour :
fournir une première notification (110) concernant un changement d'état et/ou de disponibilité des informations de données collectables (101a) au deuxième dispositif (102, 103, 105).

4. Dispositif (100) selon l'une quelconque des revendications 1 à 3, configuré en outre pour :
recevoir des informations de métadonnées analytiques (101b) depuis un troisième dispositif (103), dans lequel le troisième dispositif (103) est mis en œuvre en tant que Fonction d'Analyse de Données de Réseau, NWDAF ;
recevoir une seconde requête (104) pour des informations de métadonnées analytiques depuis un quatrième dispositif (102, 103, 106, 105) ;
fournir les informations de métadonnées analytiques (101b) au quatrième dispositif (105, 102, 103, 106) en réponse à la seconde requête (104) ; et
éventuellement, fournir une seconde notification (110) concernant un changement d'état et/ou de disponibilité des informations de métadonnées analytiques (101b) au quatrième dispositif (102, 103, 105).

5. Dispositif (100) selon la revendication 4, dans lequel les informations de métadonnées analytiques (101b) indiquent des données analytiques associées.

6. Dispositif (100) selon la revendication 4 ou 5, dans lequel les informations de métadonnées analytiques (101b) comportent une identification des données analytiques associées, une catégorie des données analytiques, et/ou un type des données analytiques.

7. Dispositif (102) permettant de fournir des données collectables dans un réseau, dans lequel le dispositif (102) est mis en œuvre en tant que Fonction de Réseau, NF, ou Fonction d'Application, AF, étant configuré pour :
générer des informations de données collectables (101a) associées aux données collectables, dans lequel les informations de données collectables permettent d'identifier à la fois des données collectables standard et non standard, et les données collectables comprennent au moins les unes parmi des données collectables standard et non standard ; et
envoyer les informations de données collectables à un dispositif (100) pour découvrir des données dans le réseau, dans lequel le dispositif (100) est mis en œuvre en tant que Fonction de Référentiel de Réseau, NRF.

8. Dispositif (102) selon la revendication 7, configuré en outre pour :
recevoir une requête (107) de données collectables sur la base des informations de données collectables depuis un deuxième dispositif (106, 103, 105) recherchant des données collectables dans le réseau ; et
fournir (118) des informations de point de collecte (108a) associées aux données collectables au deuxième dispositif (106, 103, 105) en réponse à la requête (107), dans lequel les informations de point de collecte (108a) indiquent d'où les données collectables associées peuvent être obtenues ; et
éventuellement, configurer (119) un dispositif cible (200) qui doit recevoir des données depuis le dispositif (102).

9. Dispositif (100, 102, 103, 105, 106) selon la revendication 8,
dans lequel les informations de point de collecte (108a) comportent :
un type de point de collecte associé, et
une identification du point de collecte associé.

10. Dispositif client (102) selon l'une quelconque des revendications 7 à 9, configuré en outre pour :
recevoir une requête (107) de données collectables sur la base des informations de données collectables (101a) depuis un deuxième dispositif (105, 106, 103) ; et
fournir des informations d'interprétation de récupération (108b) associées aux données collectables au deuxième dispositif (105, 106, 103) en réponse à la requête (107) ; et/ou
fournir des informations d'interprétation de récupération (108b) pour la configuration d'un dispositif cible (200).

11. Dispositif (100, 102, 103, 105, 106) selon la revendication 10, dans lequel
les informations d'interprétation de récupération (108b) indiquent comment les données collectables associées peuvent être lues et/ou traitées ; et/ou
les informations d'interprétation de récupération (108b) comportent au moins l'un parmi :
une identification d'un interpréteur applicable aux données collectables associées,
un type d'interpréteur, et
une référence d'interpréteur.

12. Dispositif (100, 102, 103, 105, 106) selon l'une des revendications 1 à 11, dans lequel les informations de données collectables (101a) indiquent des données collectables associées et/ou comment ces données collectables associées peuvent être obtenues.

13. Dispositif (100, 102, 103, 105, 106) selon l'une des revendications 1 à 12, dans lequel les informations de données collectables (101a) comportent une identification de données collectables associées.

14. Système, comprenant un dispositif (100) permettant de découvrir des données dans un réseau selon l'une des revendications 1 à 6 ou 12 à 13, en se référant à l'une quelconque des revendications 1 à 6, et dispositif (103) permettant de fournir des données analytiques dans le réseau, le dispositif (103) permettant de fournir des données analytiques dans le réseau étant configuré pour :
générer des informations de métadonnées analytiques (101b) associées à des données analytiques ; et
envoyer les informations de métadonnées analytiques (101b) au dispositif (100) pour découvrir des données dans le réseau.

15. Système selon la revendication 14, comprenant en outre un dispositif (109) pour rechercher des données analytiques dans le réseau, le dispositif (109) étant configuré pour :
obtenir des informations de métadonnées analytiques (101b) depuis le dispositif (100) pour découvrir des données dans le réseau ; et
obtenir des données analytiques depuis le dispositif (103) pour fournir des données analytiques dans le réseau selon les informations de métadonnées analytiques (101b).

16. Système, comprenant un dispositif (100) permettant de découvrir des données dans un réseau selon l'une des revendications 1 à 6 ou 12 à 13, en se référant à l'une quelconque des revendications 1 à 6, et dispositif (106) permettant de rechercher des données collectables dans le réseau, le dispositif (106) permettant de rechercher des données collectables dans le réseau étant configuré pour :
obtenir des informations de données collectables (101a) depuis le dispositif (100) pour découvrir des données dans le réseau ;
obtenir des données collectables selon les informations de données collectables (101a) depuis l'au moins un premier dispositif (102) ;
recevoir (118) des informations de point de collecte (108a) et/ou des informations d'interprétation de récupération (108b) associées aux données collectables depuis l'au moins un premier dispositif (102) en réponse à la requête (107) ; et
obtenir les données collectables depuis un point de collecte selon les informations de point de collecte (108a) et/ou sur la base des informations d'interprétation de récupération (108b).

17. Système selon la revendication 16, dans lequel le dispositif (106) permettant de rechercher des données collectables dans le réseau est en outre configuré pour :
obtenir les données collectables depuis l'au moins un premier dispositif (102), si le point de collecte selon les informations de point de collecte (108a) est un point de collecte direct ; et/ou
obtenir les données collectables depuis un autre dispositif (200), si le point de collecte selon les informations de point de collecte (108a) est un point de collecte indirect ; et/ou
obtenir les données collectables depuis l'au moins un premier dispositif (102), auquel la requête (107) a été envoyée, si le point de collecte selon les informations de point de collecte (108a) est un point de collecte direct ; et/ou
obtenir (122) les données collectables depuis un autre dispositif (200), auquel la requête (107) n'a pas été envoyée.

18. Méthode (600) permettant de découvrir des données dans un réseau, la méthode (600) comprenant :
l'obtention (601), par un dispositif (100) permettant de découvrir des données dans le réseau, dans laquelle le dispositif (100) est mis en œuvre en tant que Fonction de Référentiel de Réseau, NRF, d'informations de données collectables (101a) associées à des données collectables depuis au moins un premier dispositif (102, 103) fournissant les données collectables, dans laquelle les informations de données collectables permettent d'identifier à la fois des données collectables standard et non standard, les données collectables comprennent au moins les unes parmi des données collectables standard et non standard et l'au moins un premier dispositif (102) est mis en œuvre en tant que Fonction Réseau, NF, et/ou Fonction d'Application, AF ;
l'obtention (602), par le dispositif (100) permettant de découvrir des données dans le réseau, d'une requête (104) d'informations de données collectables (101a) depuis un deuxième dispositif (102, 103, 105, 106, 107) recherchant des données collectables dans le réseau ; et
la fourniture (603), par le dispositif (100) permettant de découvrir des données dans le réseau, des informations de données collectables (101a) au deuxième dispositif (105) en réponse à la requête (104).

19. Méthode (700) permettant de fournir des données collectables dans un réseau, la méthode (700) comprenant :
la génération (701), par une Fonction Réseau, NF, ou une Fonction d'Application, AF, d'informations de données collectables (101a) associées aux données collectables, dans laquelle les informations de données collectables permettent d'identifier à la fois des données collectables standard et non standard, et les données collectables comprennent au moins les unes parmi des données collectables standard et non standard ; et
l'envoi (702), par la Fonction Réseau, NF, ou la Fonction d'Application, AF, respectivement, des informations de données collectables (101a) à un dispositif (100) permettant de découvrir des données dans le réseau, dans laquelle le dispositif (100) est mis en œuvre en tant que Fonction de Référentiel Réseau, NRF.
